# FASCICULE DE BREVET EUROPEEN

(11) **EP 3 155 940 B1**
(45) Date de publication et mention de la délivrance du brevet: **15.01.2020**
(21) Numéro de dépôt: 16193995.4
(22) Date de dépôt: 14.10.2016
(51) Int. Cl.: A47J 43/07

(54) **APPAREIL DE CUISSON DOMESTIQUE**
HAUSHALTSKOCHGERÄT
DOMESTIC COOKING APPLIANCE

(30) Priorité: 14.10.2015 FR 1559772
(43) Date de publication de la demande: 19.04.2017
(73) Titulaire: SEB S.A., 69130 Ecully (FR)
(72) Inventeur: BOURGEOIS-JACQUET, Jean-Marie, 21800 SENNECEY-LES-DIJON (FR)
(74) Mandataire: Bourrières, Patrice

(56) Documents cités:
- EP-A1- 1 836 905
- WO-A1-2013/065546
- WO-A2-2013/021286
- DE-U1-202010 017 128
- JP-A- 2008 278 924
- US-A- 5 201 263
- US-A- 5 516 208

## Description

La présente invention concerne de manière générale un appareil de cuisson et en particulier un appareil de cuisson domestique multifonction, qui peut proposer un brassage des aliments en fonction de la recette suivie. En d'autres termes, l'invention concerne un appareil de cuisson dont la fonction de brassage est optionnelle.

Il est connu dans l'art antérieur des dispositifs de cuisson avec des fonctions de brassage, comme celui présenté dans le document WO8701021A1, qui divulgue un appareil avec une cuve de cuisson recouverte d'un couvercle et comprenant des moyens de brassage rotatifs. En contrepartie, ce système présente notamment l'inconvénient d'être volumineux, complexe et donc couteux, en raison notamment d'un arbre rotatif traversant le couvercle recouvrant l'espace de cuisson, et relié à un moteur d'entraînement par une courroie.

Le document DE2102062A1 divulgue quant à lui un appareil de cuisson avec des moyens de brassage d'une cuve de cuisson et entrainés par un moteur situé au dessus d'une structure ouverte agencée au dessus de la cuve de cuisson. Ici aussi, l'appareil est volumineux et donc peu pratique à manipuler, nettoyer, ranger.

Enfin, le document WO2006000700A2 divulgue un appareil de cuisson avec des moyens de brassage agencés dans un espace de cuisson défini par une cuve de cuisson. Cependant, les moyens de brassage sont motorisés par un moteur agencé sous la cuve de cuisson, ce qui oblige à prévoir un passage dans cette dernière, ce qui rend difficile l'utilisation de l'appareil sans les moyens de brassage.

D'autres appareils de cuisson similaires sont connus des documents US 5 201 263, DE 20 2010 017128 U, JP 2008 278924 et US 5 516 208.

Un but de la présente invention est de répondre aux inconvénients des documents de l'art antérieur mentionnés ci-dessus et en particulier, tout d'abord, de proposer un appareil de cuisson multifonction avec des moyens de brassage optionnels, mais aisé à manipuler, compact, et économique, ce qui le rend attractif pour une utilisation domestique.

Pour cela un premier aspect de l'invention concerne un appareil de cuisson domestique comprenant :
- une cuve de cuisson agencée pour recevoir des aliments à cuire,
- des moyens de brassage amovibles par rapport à l'appareil de cuisson et agencés pour brasser des aliments contenus dans la cuve de cuisson,
- un couvercle agencé pour fermer un espace de cuisson défini au moins en partie par la cuve de cuisson,
- des moyens d'entraînement agencés pour entraîner en mouvement les moyens de brassage lorsqu'ils sont montés sur l'appareil de cuisson, caractérisé en ce que les moyens d'entraînement sont agencés dans le couvercle et les moyens de brassage comprennent une partie mobile par rapport à la cuve de cuisson, et une partie fixe par rapport à la cuve de cuisson comprenant une couronne supérieure. En d'autres termes, les moyens d'entraînement sont agencés à l'intérieur du couvercle, ce qui procure une manipulation aisée de l'appareil, qui ne présente pas d'organes protubérants. L'espace de cuisson est défini au dessus de la cuve de cuisson, entre la paroi de cette dernière et le couvercle lorsqu'il est monté sur l'appareil. En conséquence, l'appareil selon la mise en œuvre ci-dessus, est aisé à utiliser puisque le couvercle ne présente pas de protubérance ou d'organe externe. De plus, les coûts sont réduits, car les moyens d'entrainement agencés et embarqués dans le couvercle peuvent être accouplés simplement avec les moyens de brassage lorsqu'il faut les utiliser, car ils sont directement au dessus de la cuve et des moyens de brassage (pas d'organe de transmission ou de renvoi à prévoir). Par ailleurs, la cuve est simple à réaliser, puisque les moyens de brassage sont amovibles et n'impactent pas sa conception (en particulier, aucun passage au travers de la cuve n'est à prévoir). Enfin, la somme de tous ces avantages procure une simplicité d'utilisation avec ou sans les moyens de brassage : pas de montage particulier du moteur à prévoir, car il est toujours dans le couvercle, utilisé ou non.

Avantageusement, les moyens d'entraînement sont agencés pour entraîner les moyens de brassage en rotation autour d'un axe de rotation, qui peut être matérialisé par un arbre de rotation monté en pivot sur l'appareil (on peut prévoir un pivot sur le couvercle).

Avantageusement, l'appareil de cuisson comprend des moyens d'accouplement agencés pour accoupler les moyens d'entraînement avec les moyens de brassage lorsque le couvercle est fermé et lorsque les moyens de brassage sont montés sur l'appareil de cuisson, les moyens d'accouplement étant agencés pour se déplacer par rapport aux moyens d'entraînement afin de s'engager avec les moyens de brassage lors d'une fermeture du couvercle. En d'autres termes, la liaison entre les moyens d'accouplement et les moyens d'entraînement présente un jeu qui permet un engagement entre les moyens de brassage et les moyens d'accouplement, et ce jeu sera récupéré lors de la mise en mouvement des moyens d'entraînement.

Si les moyens d'entraînement sont un moteur rotatif, les moyens d'accouplement présentent un degré de liberté angulaire ou un jeu angulaire avec les moyens d'entraînement. Ainsi, les moyens d'accouplement, libres dans une certaine mesure par rapport aux moyens d'entraînement, peuvent bouger pour s'accoupler et/ou s'engager avec les moyens de brassage.

Avantageusement, l'appareil de cuisson comprend des moyens d'accouplement agencés pour accoupler les moyens d'entraînement avec les moyens de brassage lorsque le couvercle est fermé et lorsque les moyens de brassage sont montés sur l'appareil de cuisson, les moyens d'accouplement sont agencés pour se déformer au moins temporairement, de sorte à permettre une fermeture du couvercle et un accouplement ultérieur à la fermeture du couvercle, entre les moyens d'entraînement et les moyens de brassage. L'utilisation est simplifiée, puisque les moyens d'accouplement, en se déformant permettent de fermer le couvercle, et ensuite, de manière automatique, feront l'accouplement entre moyens de brassage et moyens d'entraînement : on peut prévoir des contre-formes simples qui doivent s'emboîter entre elles, mais il n'y a pas besoin de les aligner entre elles avant de fermer le couvercle. La fermeture du couvercle se fait avec un premier déplacement et/ou déformation des moyens d'accouplement, l'alignement se fait lorsque le mouvement débute et l'accouplement est automatique par retour et/ou deuxième déplacement et/ou déformation des moyens d'accouplement.

En d'autres termes, les moyens de brassage sont distincts du couvercle, ils ne sont pas accouplés de manière permanente sur le couvercle. Cela permet de mettre en place les moyens de brassage en position dans la cuve de cuisson avant les aliments à préparer et refermer ensuite le couvercle (alors que si les moyens de brassage étaient accouplés au couvercle, lors de la fermeture, ils buteraient/appuieraient sur les aliments déjà dans la cuve de cuisson). Ensuite, lors de l'ouverture du couvercle, les moyens de brassage qui ne sont pas embarqués sur celui-ci restent dans la cuve de cuisson et l'ouverture ne provoque pas de projection de nourriture.

Avantageusement, il est prévu des moyens ou une unité de détection agencée pour détecter la présence ou l'absence des moyens de brassage, pour commander la marche ou l'arrêt des moyens d'entraînement. Ainsi, les moyens d'entraînement ne sont mis en route que si les moyens de brassage sont en place dans la cuve de cuisson, en fonction de la recette suivie.

Avantageusement, les moyens d'accouplement comprennent un entraîneur monté en pivot glissant par rapport au couvercle. On peut prévoir des moyens élastiques tels qu'un ressort pour pousser constamment l'entraîneur vers les moyens de brassage.

Avantageusement, les moyens d'entrainement comprennent une portion d'accouplement avec une première forme, et les moyens de brassage comprennent une portion de réception avec une deuxième forme qui est complémentaire de la première forme pour la recevoir et transmettre un mouvement depuis les moyens d'entraînement vers les moyens de brassage.

Avantageusement, le couvercle comprend un pare vapeur amovible, et l'entraîneur est solidaire du pare vapeur. En d'autres termes, l'entraîneur est embarqué sur le pare vapeur, ce qui simplifie l'utilisation, avec peu de composants séparables qui pourraient se perdre ou présenter une difficulté de montage.

Avantageusement, les moyens de brassage comprennent une partie mobile agencée pour être mobile par rapport à la cuve de cuisson et une partie fixe, telle qu'un doigt de retournement, agencée pour rester fixe par rapport à la cuve de cuisson, lorsque les moyens de brassage brassent les aliments dans la cuve de cuisson, de sorte que la partie fixe forme une butée ou un obstacle pour les aliments brassés par la partie mobile au cours du brassage. La partie fixe peut être un doigt qui épouse la forme intérieure de la cuve de cuisson et forme alors une protubérance sur laquelle les aliments vont buter et se retourner.

Avantageusement, l'appareil de cuisson comprend un boîtier, et la cuve de cuisson est amovible par rapport au boîtier, et les moyens de brassage comprennent un doigt d'indexage dans le boîtier, agencé entre la cuve de cuisson et le couvercle, et solidaire de la partie fixe. L'installation est aisée, même si la cuve de cuisson est amovible pour être facilement lavée.

Avantageusement, les moyens de brassage comprennent une pale inférieure, agencée pour brasser des aliments reposant au fond de la cuve de cuisson.

Avantageusement, les moyens de brassage comprennent une pale supérieure, agencée pour brasser des aliments agencés au dessus d'aliments reposant au fond de la cuve de cuisson.

Avantageusement, la pale inférieure et la pale supérieure sont mobiles chacune selon un mouvement de rotation de sens opposé.

Avantageusement, la pale inférieure et la pale supérieure sont solidaires et mobiles en rotation selon un même mouvement de rotation.

Avantageusement, les moyens de brassage comprennent une portion de raclage, agencée pour racler la cuve de cuisson. La portion de raclage, telle qu'une lame ou un joint de raclage peut être amovible par rapport aux moyens de brassage, pour n'être montée que dans le cas de recettes où il faut décoller les aliments de la cuve de cuisson, ou dans un cycle de nettoyage où il faut enlever les résidus collés à la cuve de cuisson.

Avantageusement, le couvercle est articulé par rapport à l'appareil de cuisson. On peut envisager une articulation pivot qui permet de basculer le couvercle pour l'ouvrir.

Avantageusement, le couvercle est amovible par rapport à l'appareil de cuisson. Cette mise en œuvre permet de laver ou démonter aisément le couvercle ou ses composants.

Avantageusement, les moyens d'entraînement comprennent un moteur électrique, tel qu'un motoréducteur.

Avantageusement, le couvercle comprend une paroi définissant une coque, et le moteur électrique des moyens d'entraînement est logé dans la coque. La coque peut être une double paroi.

Avantageusement, les moyens de brassage sont distincts et séparés du couvercle. En d'autres termes, les moyens de brassage ne sont pas solidaires et/ou embarqués avec le couvercle. Ils forment un composant totalement séparé du couvercle.

Un dernier aspect de l'invention concerne un appareil de cuisson comprenant :
- une cuve de cuisson amovible par rapport à l'appareil,
- un couvercle agencé pour fermer un espace de cuisson une fois la cuve de cuisson installée dans l'appareil de cuisson,
- des moyens de brassage, amovibles par rapport à l'appareil et agencés pour brasser des aliments contenus dans la cuve de cuisson,
- des moyens d'entraînement agencés pour entraîner en mouvement les moyens de brassage dans la cuve de cuisson,
caractérisé en ce que les moyens d'entraînement sont agencés dans le couvercle, et en ce que l'appareil comprend des moyens d'accouplement entre les moyens d'entraînement et les moyens de brassage, agencés pour permettre :
- une fermeture du couvercle et
- un accouplement entre les moyens d'entraînement et les moyens de brassage, ultérieurement à la fermeture du couvercle.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en coupe d'un appareil de cuisson selon la présente invention, avec des moyens de brassage installés dans une cuve de cuisson et entraînés en rotation par un moteur logé dans un couvercle de l'appareil de cuisson ;
- la figure 2 représente une vue en perspective des moyens de brassage ;
- la figure 3 représente une vue de dessus en perspective de l'appareil de la figure 1, sans le couvercle ;
- la figure 4 représente une vue de dessous du couvercle de l'appareil de la figure 1 ;
- la figure 5 représente un pare vapeur du couvercle de la figure 4.

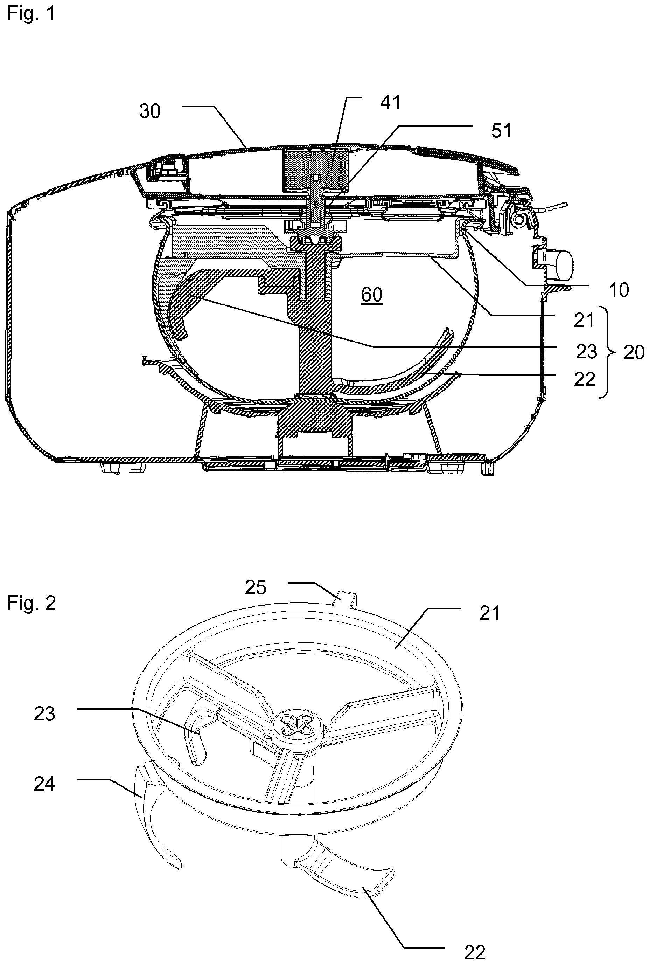

La figure 1 représente un appareil de cuisson en coupe. Une cuve de cuisson 10 est installée dans un boîtier de l'appareil, pour recevoir des aliments à cuire. Un couvercle 30 est prévu pour fermer un espace de cuisson 60 au dessus de la cuve de cuisson 10, afin de confiner la chaleur de cuisson. L'appareil comprend typiquement des moyens de chauffe, tels qu'une résistance électrique qui peut être agencée sous ou à proximité de la cuve de cuisson 10. Une utilisation avantageuse de l'appareil de cuisson de la figure 1 est la cuisson de riz par exemple. Pour des raisons de clarté, les autres organes (isolation thermique, composants électriques et électroniques...) de l'appareil à l'intérieur du boîtier ne sont pas représentés.

Cependant, au cours de la cuisson, si on désire utiliser l'appareil de cuisson pour d'autres recettes telles qu'une ratatouille ou sauce bolognaise, il peut être avantageux ou nécessaire de remuer les aliments, afin soit de les cuire de manière homogène, ou pour les empêcher d'attacher sur la cuve de cuisson 10. A cet effet, l'invention propose des moyens de brassage 20 à ajouter dans la cuve de cuisson 10.

Les moyens de brassage 20 sont amovibles par rapport à l'appareil de cuisson et se composent principalement d'une partie mobile par rapport à la cuve de cuisson, avec une pale inférieure 22 et une pale supérieure 23 d'une part, et d'une partie fixe par rapport à la cuve de cuisson, avec une couronne supérieure 21, d'autre part.

Tels que représentés sur la figure 1, les moyens de brassage 20 sont simplement posés dans la cuve de cuisson 10, avec la couronne supérieure 21 qui est centrée dans la cuve de cuisson par son diamètre extérieur avec un épaulement en appui sur la cuve de cuisson 10, et un pied en appui au centre de la paroi inférieure de la cuve de cuisson 10. On comprend qu'il est très simple d'équiper l'appareil de cuisson avec les moyens de brassage 20, puisqu'il suffit de les poser dans la cuve de cuisson 10 : il n'y a pas d'opération d'accouplement ou de fixation à effectuer.

Pour entraîner en rotation les moyens de brassage 20, des moyens d'entraînement tels qu'un moteur ou motoréducteur 41 sont prévus dans le couvercle 30, accouplés à des moyens d'accouplement tels qu'un entraîneur 51 qui dépasse de la paroi inférieure du couvercle 30. En d'autres termes, le motoréducteur 41 est complètement logé dans le couvercle 30 et il n'en dépasse pas. L'utilisateur remarque seulement l'entraîneur 51 lorsque le couvercle 30 est ouvert. En conséquence, l'aspect extérieur de l'appareil de cuisson n'est pas impacté par la fonction de brassage qui est une option.

L'appareil de cuisson selon la présente invention comprend une chaîne de transmission du mouvement des moyens de brassage spécialement étudiée pour simplifier l'utilisation. En effet, l'utilisateur pose les moyens de brassage dans la cuve de cuisson 10 et peut refermer le couvercle 30 sans se préoccuper de l'alignement entre l'entraîneur 51 et la partie mobile des moyens de brassage 20.

Il est prévu en effet un jeu angulaire entre l'entraineur 51 et l'axe du motoréducteur 41 qui permet à l'entraîneur 51 de tourner lors de la fermeture du couvercle 30 pour s'engager avec une contre-forme des moyens de brassage. Lors de la mise en route du motoréducteur 41, le jeu angulaire est d'abord rattrapé et ensuite les moyens de brassage 20 sont entraînés en rotation.

On peut en alternative ou en addition à la mise en œuvre ci-dessus prévoir que l'entraîneur 51 soit monté en pivot glissant sur l'axe du motoréducteur 41 pour remonter lors de la fermeture du couvercle 30 s'il n'est pas aligné avec la contre-forme des moyens de brassage 20 (car il entre en butée avec ces derniers). Lors de la mise en route du motoréducteur 41, le décalage angulaire est d'abord rattrapé, l'entraîneur 51 descend alors dans la contre-forme et ensuite les moyens de brassage 20 sont entraînés en rotation. On peut bien entendu prévoir des moyens élastiques pour pousser l'entraineur 51 vers les moyens de brassage 20.

La figure 2 représente une vue en perspective des moyens de brassage 20, avec la pale inférieure 22 et la pale supérieure 23 montées en pivot sur la couronne supérieure 21. Il est à noter que la pale inférieure 22 et la pale supérieure 23 peuvent être monobloc ou distinctes, et aussi solidaires ou indépendantes dans leur mouvement.

On remarque aussi un doigt de retournement 24 qui est solidaire de la couronne supérieure 21, et qui est agencé pour épouser la forme de la cuve de cuisson 10, afin de former un obstacle fixe pour les aliments qui sont brassés. En conséquence, le doigt de retournement 24 va forcer les aliments à se retourner/se mélanger lorsque la pale inférieure 22 et/ou la pale supérieure 23 vont les pousser sur le doigt de retournement 24.

On remarque également un doigt d'indexage 25 solidaire de la couronne supérieure 21, pour arrêter en rotation cette dernière par un engagement avec le boitier de l'appareil de cuisson. Ce doigt d'indexage, non visible sur la figure 1 est agencé au dessus du rebord de la cuve de cuisson 10, entre le couvercle 30 et cette dernière, lorsque les moyens de brassage 20 sont posés dans la cuve de cuisson 10.

On remarque enfin la portion supérieure de la partie mobile des moyens de brassage 20, qui comporte une empreinte en croix, qui est une contre-forme de l'entraîneur 51, afin de permettre un accouplement avec ce dernier pour transmettre le mouvement de rotation à la pale inférieure 22 et à la pale supérieure 23.

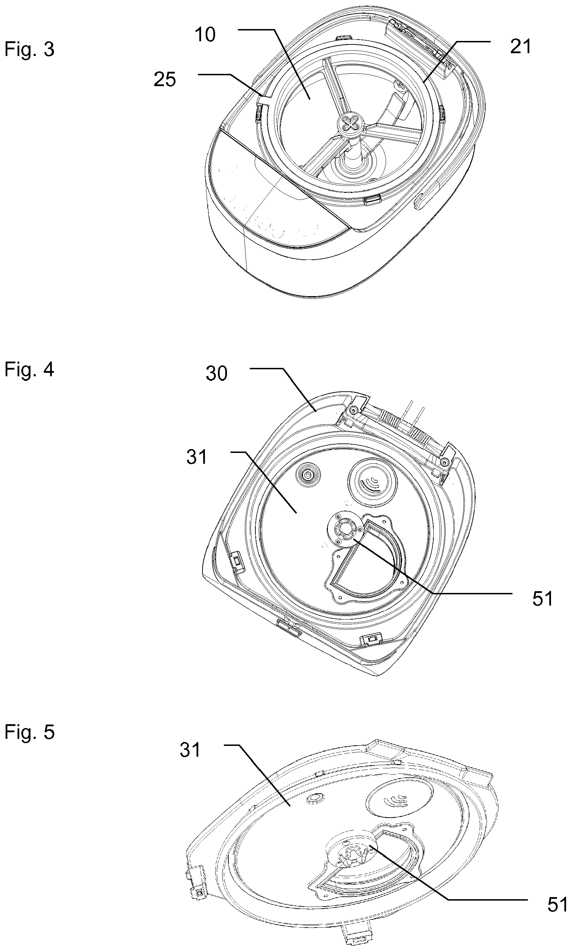

La figure 3 représente une vue de dessus de l'appareil de cuisson de la figure 1, sans le couvercle 30. On y voit le doigt d'indexage 25 engagé avec le boîtier de l'appareil de cuisson, pour arrêter en rotation la couronne supérieure 21.

La figure 4 représente une vue de dessous du couvercle 30, avec l'entraîneur 51 en protubérance, et une croix en protubérance, qui est agencée pour s'engager dans la contre-forme des moyens de brassage 20, visible à la figure 2. On peut également voir un pare-vapeur 31 sur lequel est monté l'entraîneur 51 en pivot, et qui est démontable par rapport au couvercle 30. On procure ainsi une facilité de nettoyage, car c'est le pare-vapeur qui sera sali par des projections au cours de la cuisson, et le rendre démontable permet de le laver seul, comme le montre la figure 5.

Le scénario d'usage de l'appareil de cuisson de la figure 1 est le suivant : une fois les moyens de brassage 20 mis en place sur la cuve de cuisson 10, l'utilisateur met en place les ingrédients dans cette dernière. Le couvercle 30 est refermé. L'utilisateur lance le programme de cuisson approprié qui va combiner brassage (l'axe du moteur ou motoréducteur 41 entraine l'entraîneur 51 sur la tige de la partie mobile des moyens de brassage 20) et cycle de cuisson pour un résultat optimal sans surveillance.

L'appareil comprend donc une unité de commande qui va piloter le fonctionnement du motoréducteur 41 en fonction des recettes qui nécessitent un brassage continu ou ponctuel. On peut également envisager une détection de la présence des moyens de brassage 20, pour sécuriser le fonctionnement et avertir l'utilisateur s'il oublie de les positionner dans la cuve de cuisson 10.

L'invention proposant des moyens de brassage amovibles permet donc d'utiliser un cuiseur à riz pour d'autres recettes, sans pour autant modifier l'appareil : la cuve de cuisson 10 n'a pas besoin d'être percée par exemple. On procure également une utilisation très simple : il suffit de poser les moyens de brassage 20 lorsqu'il faut remuer les aliments, et comme cela est fait avant de mettre les aliments dans la cuve de cuisson 10, la fermeture du couvercle 30 n'est pas remise en cause. Enfin, le motoréducteur (ou moteur) 41 est logé dans le couvercle (dans son épaisseur, entre les parois qui le constituent), il n'y a pas de protubérance.

Il est fait mention d'un entraîneur 51 avec une forme en croix et d'une contre-forme sur les moyens de brassage 20, mais on peut envisager l'inverse (la contre-forme sur l'entraîneur 51 et la croix sur les moyens de brassage 20), et on peut également envisager d'autres type d'accouplements (avec un seul doigt, avec des cannelures, des stries, ...).

## Revendications

1. Appareil de cuisson domestique comprenant :
- une cuve de cuisson (10) agencée pour recevoir des aliments à cuire,
- des moyens de brassage (20) amovibles par rapport à l'appareil de cuisson et agencés pour brasser des aliments contenus dans la cuve de cuisson (10),
- un couvercle (30) agencé pour fermer un espace de cuisson défini au moins en partie par la cuve de cuisson (10),
- des moyens d'entraînement agencés pour entraîner en mouvement les moyens de brassage (20) lorsqu'ils sont montés sur l'appareil de cuisson, les moyens d'entraînement agencés dans le couvercle (30), **caractérisé en ce que** les moyens de brassage (20) comprennent une partie mobile par rapport à la cuve de cuisson, et une partie fixe par rapport à la cuve de cuisson comprenant une couronne supérieure (21).

2. Appareil de cuisson selon la revendication précédente, comprenant des moyens d'accouplement agencés pour accoupler les moyens d'entraînement avec les moyens de brassage (20) lorsque le couvercle (30) est fermé et lorsque les moyens de brassage (20) sont montés sur l'appareil de cuisson, les moyens d'accouplement étant agencés pour se déplacer par rapport aux moyens d'entraînement afin de s'engager avec les moyens de brassage (20) lors d'une fermeture du couvercle.

3. Appareil de cuisson selon la revendication 1 ou 2, comprenant des moyens d'accouplement agencés pour accoupler les moyens d'entraînement avec les moyens de brassage (20) lorsque le couvercle (30) est fermé et lorsque les moyens de brassage (20) sont montés sur l'appareil de cuisson, dans lequel les moyens d'accouplement sont agencés pour se déformer au moins temporairement, de sorte à permettre une fermeture du couvercle (30) et un accouplement ultérieur à la fermeture du couvercle (30), entre les moyens d'entraînement et les moyens de brassage (20).

4. Appareil de cuisson selon la revendication 2 ou 3, dans lequel les moyens d'accouplement comprennent un entraîneur (51) monté en pivot glissant par rapport au couvercle (30).

5. Appareil de cuisson selon la revendication précédente, dans lequel le couvercle (30) comprend un pare vapeur (31) amovible, et dans lequel l'entraîneur (51) est solidaire du pare vapeur (31).

6. Appareil de cuisson selon l'une des revendications précédentes, dans lequel la partie fixe des moyens de brassage (20) comprend en outre un doigt de retournement (24), agencée pour rester fixe par rapport à la cuve de cuisson (10), lorsque les moyens de brassage (20) brassent les aliments dans la cuve de cuisson (10), de sorte que la partie fixe forme une butée ou un obstacle pour les aliments brassés par la partie mobile.

7. Appareil de cuisson selon la revendication précédente, comprenant un boîtier, et dans lequel la cuve de cuisson (10) est amovible par rapport au boîtier, et dans lequel les moyens de brassage (20) comprennent un doigt d'indexage (25) dans le boîtier, agencé entre la cuve de cuisson (10) et le couvercle (30), et solidaire de la partie fixe.

8. Appareil de cuisson selon l'une des revendications précédentes, dans lequel les moyens de brassage (20) comprennent une pale inférieure (22), agencée pour brasser des aliments reposant au fond de la cuve de cuisson (10).

9. Appareil de cuisson selon l'une des revendications précédentes, dans lequel les moyens de brassage (20) comprennent une pale supérieure (23), agencée pour brasser des aliments agencés au dessus d'aliments reposant au fond de la cuve de cuisson (10).

10. Appareil de cuisson selon l'une des revendications précédentes, dans lequel les moyens de brassage (20) comprennent une portion de raclage, agencée pour racler la cuve de cuisson (10).

11. Appareil de cuisson selon l'une des revendications précédentes, dans lequel le couvercle (30) est articulé par rapport à l'appareil de cuisson.

12. Appareil de cuisson selon l'une des revendications précédentes, dans lequel les moyens d'entraînement comprennent un moteur électrique, tel qu'un motoréducteur (41).

13. Appareil de cuisson selon la revendication précédente, dans lequel le couvercle (30) comprend une paroi définissant une coque, et dans lequel le moteur électrique des moyens d'entraînement est logé dans la coque.

14. Appareil de cuisson selon la revendication précédente, dans lequel les moyens de brassage (20) sont distincts et séparés du couvercle (30).

## Patentansprüche

1. Häusliches Kochgerät, umfassend:
- ein Kochgefäß (10), das zum Aufnehmen von zu kochenden Nahrungsmitteln angeordnet ist,
- Rührmittel (20), die relativ zu dem Kochgerät abnehmbar sind und zum Rühren von in dem Kochgefäß (10) enthaltenen Nahrungsmitteln angeordnet sind,
- eine Abdeckung (30), die angeordnet ist, um einen durch das Kochgefäß (10) zumindest teilweise definierten Kochraum zu verschließen,
- Antriebsmittel, die angeordnet sind, um die Rührmittel (20) in Bewegung zu versetzen, wenn sie auf dem Kochgerät angebracht sind, wobei die Antriebsmittel in der Abdeckung (30) angeordnet sind, **dadurch gekennzeichnet, dass** die Rührmittel (20) einen relativ zu dem Kochgefäß beweglichen Abschnitt und einen relativ zu dem Kochgefäß feststehenden Teil aufweisen, der einen oberen Ring (21) aufweist.

2. Kochgerät nach dem vorhergehenden Anspruch, das Kopplungsmittel umfasst, die angeordnet sind, um die Antriebsmittel mit den Rührmitteln (20) zu koppeln, wenn die Abdeckung (30) geschlossen ist und wenn die Rührmittel (20) an dem Kochgerät angebracht sind, wobei die Kopplungsmittel angeordnet sind, um sich relativ zu den Antriebsmitteln zu bewegen, um beim Schließen der Abdeckung mit den Rührmitteln (20) in Eingriff zu kommen.

3. Kochgerät nach Anspruch 1 oder 2, umfassend Kopplungsmittel, die angeordnet sind, um die Antriebsmittel mit den Rührmitteln (20) zu koppeln, wenn die Abdeckung (30) geschlossen ist und wenn die Rührmittel (20) an dem Kochgerät angebracht sind, wobei die Koppelmittel so angeordnet sind, dass sie sich zumindest zeitweise verformen, um ein Schließen der Abdeckung (30) und ein Koppeln nach dem Schließen der Abdeckung (30) zwischen den Antriebsmitteln und Rührmitteln (20) zu ermöglichen.

4. Kochgerät nach Anspruch 2 oder 3, wobei die Koppelmittel einen Mitnehmer (51) umfassen, der relativ zu der Abdeckung (30) schwenkbar gleitend angebracht ist.

5. Kochgerät nach dem vorhergehenden Anspruch, wobei die Abdeckung (30) eine abnehmbare Dampfsperre (31) umfasst, und wobei der Mitnehmer (51) einstückig mit der Dampfsperre (31) ist.

6. Kochgerät nach einem der vorhergehenden Ansprüche, wobei der feststehende Teil der Rührmittel (20) ferner einen Umkehrfinger (24) umfasst, der so angeordnet ist, dass er relativ zu dem Kochgefäß (10) feststehend bleibt, wenn die Rührmittel(20) die Nahrungsmittel in dem Kochgefäß (10) rühren, so dass der feststehende Teil einen Anschlag oder ein Hindernis für die von dem beweglichen Teil gerührten Nahrungsmittel bildet.

7. Kochgerät nach dem vorhergehenden Anspruch, das ein Gehäuse umfasst, und wobei das Kochgefäß (10) relativ zum Gehäuse abnehmbar ist, und wobei die Rührmittel(20) einen Indizierungsfinger (25) in dem Gehäuse umfassen, der zwischen dem Kochgefäß (10) und der Abdeckung (30) angeordnet ist und am feststehenden Teil befestigt ist.

8. Kochgerät nach einem der vorhergehenden Ansprüche, wobei die Rührmittel (20) eine untere Schaufel (22) umfassen, die zum Rühren von Nahrungsmitteln angeordnet ist, die auf dem Boden des Kochgefäßes (10) ruhen.

9. Kochgerät nach einem der vorhergehenden Ansprüche, wobei die Rührmittel (20) eine obere Schaufel (23) umfassen, die zum Rühren von Nahrungsmitteln angeordnet ist, die über Nahrungsmitteln angeordnet sind, die auf dem Boden des Kochgefäßes (10) ruhen.

10. Kochgerät nach einem der vorhergehenden Ansprüche, wobei die Rührmittel (20) einen Abstreifabschnitt umfassen, der zum Abstreifen des Kochgefäßes (10) angeordnet ist.

11. Kochgerät nach einem der vorhergehenden Ansprüche, wobei die Abdeckung (30) relativ zu dem Kochgerät angelenkt ist.

12. Kochgerät nach einem der vorhergehenden Ansprüche, wobei die Antriebsmittel einen Elektromotor, beispielsweise einen Getriebemotor (41) umfassen.

13. Kochgerät nach dem vorhergehenden Anspruch, wobei die Abdeckung (30) eine Wand umfasst, die eine Schale definiert, und wobei der Elektromotor der Antriebsmittel in der Schale untergebracht ist.

14. Kochgerät nach dem vorhergehenden Anspruch, wobei die Rührmittel (20) von der Abdeckung (30) verschieden und getrennt sind.

## Claims

1. Domestic cooking appliance comprising:
- a cooking vessel (10) arranged to hold ingredients to be cooked,
- stirring means (20) that are removable with respect to the cooking vessel and arranged to stir the ingredients contained in the cooking vessel (10),
- a lid (30) arranged to close a cooking space defined partially at least by the cooking vessel (10),
- driving means arranged to drive the stirring means (20) when said driving means are mounted on the cooking appliance, the driving means being arranged in the lid (30), **characterised in that** the stirring means (20) comprise a part that is mobile with respect to the cooking vessel, and a part that is fixed with respect to the cooking vessel and comprising an upper crown (21).

2. Cooking appliance according to the preceding claim, comprising coupling means arranged to couple the driving means with the stirring means (20) when the lid (30) is closed and when the stirring means (20) are mounted on the cooking appliance, the coupling means being arranged to move with respect to the driving means in order to engage with the stirring means (20) when the lid is closed.

3. Cooking appliance according to claim 1 or 2, comprising coupling means arranged to couple the driving means with the stirring means (20) when the lid (30) is closed and when the stirring means (20) are mounted on the cooking appliance, wherein the coupling means are arranged to undergo a deformation, at least temporarily, so as to enable a closing of the lid (30) and a subsequent coupling, after the closing of the lid (30), of the driving means with the stirring means (20).

4. Cooking appliance according to claim 2 or 3, wherein the coupling means comprise a driving device (51) mounted pivotally and in a sliding fashion with respect to the lid (30).

5. Cooking appliance according to the preceding claim, wherein the lid (30) comprises a removable steam barrier (31) and wherein the driving device (51) is secured to the steam barrier (31).

6. Cooking appliance according to one of the preceding claims, wherein the fixed part of the stirring means (20) further comprises an inversion pin (24), arranged to remain fixed with respect to the cooking vessel (10), when the stirring means (20) stir the ingredients in the cooking vessel (10) so that the fixed part forms an abutment or an obstacle for the ingredients stirred by the mobile part.

7. Cooking appliance according to the preceding claim, comprising a casing, and wherein the cooking vessel (10) is removable with respect to the casing, and wherein the stirring means comprise an indexing pin (25) inside the casing, arranged between the cooking vessel (10) and the lid (30), and secured to the fixed part.

8. Cooking appliance according to one of the preceding claims, wherein the stirring means (20) comprise a lower blade (22), arranged to stir the ingredients at the bottom of the cooking vessel (10).

9. Cooking appliance according to one of the preceding claims, wherein the stirring means (20) comprise an upper blade (20) arranged to stir the ingredients lying on top of the ingredients at the bottom of the cooking vessel (10).

10. Cooking appliance according to one of the preceding claims, wherein the stirring means (20) comprise a scraping portion, arranged to scrape the cooking vessel (10).

11. Cooking appliance according to one of the preceding claims, wherein the lid (30) is articulated with respect to the cooking vessel.

12. Cooking appliance according to one of the preceding claims, wherein the driving means comprise an electric motor, such as a gear motor (41).

13. Cooking appliance according to the preceding claim, wherein the lid (30) comprises a wall defining a shell, and wherein the electric motor of the driving means is housed in the shell.

14. Cooking appliance according to the preceding claim, wherein the stirring means (20) are distinct and separate from the lid (30).
